# FASCICULE DE BREVET EUROPEEN

(11) **EP 1 445 580 B1**
(45) Date de publication et mention de la délivrance du brevet: **10.03.2010**
(21) Numéro de dépôt: 04290137.1
(22) Date de dépôt: 20.01.2004
(51) Int. Cl.: G01C 19/56, G01P 3/14

(54) **Procédé de mise en oeuvre d'un résonateur sous l'effet de forces électrostatiques**
Verfahren zum Betrieb eines Resonators mit elektrostatischem Antrieb
A method for operating a resonator comprising an electrostatic actuation

(30) Priorité: 06.02.2003 FR 0301383
(43) Date de publication de la demande: 11.08.2004
(73) Titulaire: Sagem Défense Sécurité, 75015 Paris (FR)
(72) Inventeur: Renault, Alain, 95300 Pontoise (FR)
(74) Mandataire: Fruchard, Guy

(56) Documents cités:
- EP-A- 0 810 418
- FR-A- 2 755 227
- US-A- 4 951 508
- US-A- 5 850 041
- US-A- 6 158 282

## Description

La présente invention concerne un procédé de mise en oeuvre d'un résonateur électrostatique pour une utilisation en tant que capteur de rotation inertiel.

### ARRIERE PLAN DE L'INVENTION

On connaît, notamment, des documents EP-A-810 418 ou FR-A-2 792 722, des résonateurs électrostatiques comprenant un organe vibrant en forme de cloche métallisée adaptée à être mise en vibration à une fréquence de résonance sous l'effet de forces électrostatiques générées par des électrodes disposées en regard d'une partie de l'organe vibrant.

Le résonateur est adapté à fonctionner en mode gyrométrique ou en mode gyroscopique. Dans le mode gyrométrique, l'organe vibrant est excité au moyen d'une combinaison de signaux de commande appliqués à la fréquence de résonance de l'organe vibrant et modulés pour réaliser un signal de commande d'amplitude, un signal de commande de précession et un signal de commande de quadrature, ces signaux dé commande étant appliqués de façon qu'une mesure de la vibration de l'organe vibrant et une démodulation de cette vibration à la fréquence de résonance de l'organe vibrant permettent par des équations appropriées de déterminer la vitesse de rotation à laquelle le résonateur est soumis.

La précision avec laquelle la vitesse de rotation est calculée est bien entendu fonction de la précision avec laquelle peuvent être déterminés les différents termes de l'équation donnant la vitesse de rotation à mesurer. Or il s'avère que l'un de ces termes est l'amplitude de la vibration obtenue par application de la commande d'amplitude. C'est ce terme qui est connu avec le moins de précision et de stabilité. Par ailleurs, la commande de quadrature s'applique dans les mêmes directions que la commande de précession et lorsque la commande de quadrature et la commande de précession sont toutes les deux appliquées sous forme d'un signal modulé à la fréquence de résonance, toute erreur de phase dans la réalisation de la commande de quadrature se projette sur la commande de précession et provoque une erreur de dérive du résonateur.

Les mêmes problèmes se posent lorsque le résonateur est mis en oeuvre dans un mode gyroscopique, c'est-à-dire que l'organe vibrant est excité au moyen d'une combinaison de signaux de commande comprenant seulement un signal de commande d'amplitude et un signal de commande de quadrature.

Il est également connu du document US-B-5,850,041 de commander un résonateur en mode gyroscopique en appliquant la commande d'amplitude à une fréquence double de la fréquence de résonance et la commande de quadrature sous forme d'une tension continue. Toutefois d'après ce document la commande de quadrature est appliquée de façon séparée de la commande d'amplitude sur un nombre très important, de seize voire trente deux électrodes séparées. La réalisation du résonateur lui-même est donc extrêmement onéreuse, non seulement en raison de la difficulté de réaliser de façon précise un grand nombre d'électrodes mais également en raison de la difficulté à réaliser des connexions de toutes ces électrodes avec un calculateur extérieur. En outre, le circuit de commande associé est très complexe et donc également très onéreux.

### OBJET DE L'INVENTION

Un objet de l'invention est de proposer un procédé de mise en oeuvre d'un résonateur vibrant électrostatique fonctionnant avec une grande précision de préférence en utilisant un nombre réduit d'électrodes et de connexions de ces électrodes.

### BREVE DESCRIPTION DE L'INVENTION

Selon un premier aspect de l'invention on propose un procédé de mise en oeuvre en mode gyrométrique d'un résonateur comportant un organe vibrant adapté à être mis en vibration à une fréquence de résonance sous l'effet de forces électrostatiques générées par des électrodes disposées en regard d'une partie de l'organe vibrant, le procédé comportant les étapes d'exciter l'organe vibrant au moyen d'une combinaison de signaux de commande comprenant un signal de commande d'amplitude, un signal de commande de précession et un signal de commande de quadrature modulés en amplitude, de mesurer une vibration de l'organe vibrant et de démoduler la vibration à la fréquence de résonance de l'organe vibrant, le signal de commande de précession étant appliqué à une fréquence double de la fréquence de résonance. Ainsi, il se produit une intermodulation du signal de précession avec la variation de l'entrefer en regard des électrodes de commande, de sorte que par une conversion des formules trigonométriques d'argument double, présentes dans les termes résultant de l'excitation à une fréquence double, vers des formules trigonométriques d'argument simple et élimination des termes de valeur négligeable résultant de ce calcul on obtient une équation dans laquelle les termes qui comprennent l'amplitude de la vibration, sont éliminés. L'amplitude de la vibration n'a donc plus d'influence sur le calcul de la vitesse de rotation. La précision de la détermination de la vitesse de rotation du résonateur est donc augmentée.

Selon un mode de mise en oeuvre avantageux en mode gyrométrique, et selon un mode de mise en oeuvre de base en mode gyroscopique pour lequel le signal de commande de précession est supprimé, le signal de commande d'amplitude est appliqué à une fréquence double de la fréquence de résonance dans une phase d'entretien de la vibration de l'organe vibrant. Ainsi, dans un cas comme dans l'autre, on obtient une simplification des équations donnant la vitesse de rotation du résonateur de sorte que l'électronique de commande et de détermination de la vitesse de rotation du résonateur, peut être simplifiée tout en permettant d'obtenir la précision requise.

Selon un deuxième aspect de l'invention, le signal de commande de quadrature est appliqué sous forme d'un signal continu sur des électrodes communes avec le signal de commande d'amplitude. Ainsi, toute erreur de phase par rapport à la commande de précession ou toute erreur d'orientation de la commande d'amplitude est éliminée tout en minimisant le nombre d'électrodes nécessaires à la mise en oeuvre. Dans ce mode de mise en oeuvre, les forces électrostatiques résultant de la commande de quadrature sont la conséquence d'une intermodulation résultant de la variation d'entrefer au regard des électrodes. Afin que cette variation d'entrefer soit maximale, le signal de commande d'amplitude est de préférence appliqué de façon que la vibration de l'organe vibrant soit orientée pour qu'un noeud de vibration soit en regard d'un intervalle'entre deux électrodes. La partie de l'organe vibrant en regard d'une électrode est alors soumise à une variation d'entrefer non nulle qui permet d'obtenir une forte intermodulation et par voie de conséquence la meilleure précision de mesure.

Selon encore un aspect de l'invention en relation avec la mise en oeuvre du résonateur en mode gyroscopique, la commande d'amplitude à une fréquence double de la fréquence de résonance est appliquée à l'organe vibrant lui-même et la commande de quadrature est appliquée à des électrodes qui sont simultanément affectées à une détection. On obtient ainsi une dynamique accrue améliorant la précision de la mesure avec un minimum de connexions.

### BREVE DESCRIPTION DES DESSINS

D'autres caractéristiques et avantages de l'invention apparaîtront à la lecture de la description qui suit d'un procédé de mise en oeuvre d'un résonateur hémisphérique vibrant en relation avec les figures ci-jointes parmi lesquelles :
- la figure 1 est une vue en coupe axiale selon la ligne I-I de la figure 2,
- la figure 2 est une vue de dessus des électrodes du résonateur coupé selon la signe II-II de la figure 1.

### DESCRIPTION DETAILLEE DE L'INVENTION

Pour une meilleure compréhension de l'invention, le résonateur a été représenté à une échelle très agrandie et en exagérant les épaisseurs des électrodes et des entrefers.

Dans le mode de réalisation illustré, le résonateur comporte de façon connue en soi un organe vibrant hémisphérique 1, par exemple une cloche réalisée en silice et fixée par une tige 4 à un socle 3. La surface interne de la cloche 1 ainsi que le bord de celle-ci et la tige 4 sont recouverts d'une couche de métal 2. Le socle 3 porte des électrodes principales désignées par la référence numérique générale 5 et par les références numériques particulières 5.1, 5.2..., 5.8 permettant de les identifier individuellement. Les électrodes 5 s'étendent en regard du bord de l'organe vibrant 1.

Dans le mode de réalisation illustré, le résonateur comporte en outre une électrode de garde généralement désignée en 6, divisée en deux parties 6.1 et 6.2 comprenant chacune quatre électrodes auxiliaires, portant la référence numérique générale 7, et les références numériques particulières 7.1 pour les électrodes auxiliaires de la partie 6.1, et 7.2 pour les électrodes auxiliaires de la partie 6.2. Les électrodes 7.1 et 7.2 s'étendent de façon alternée entre les électrodes 5. La partie 6.1 de l'électrode de garde est constituée d'un disque central à partir duquel les électrodes auxiliaires 7.1 s'étendent radialement vers l'extérieur tandis que la partie 6.2 de l'électrode de garde est constituée d'un anneau circulaire s'étendant autour des électrodes 5 et comportant des électrodes auxiliaires 7.2 radialement en saillie vers l'intérieur.

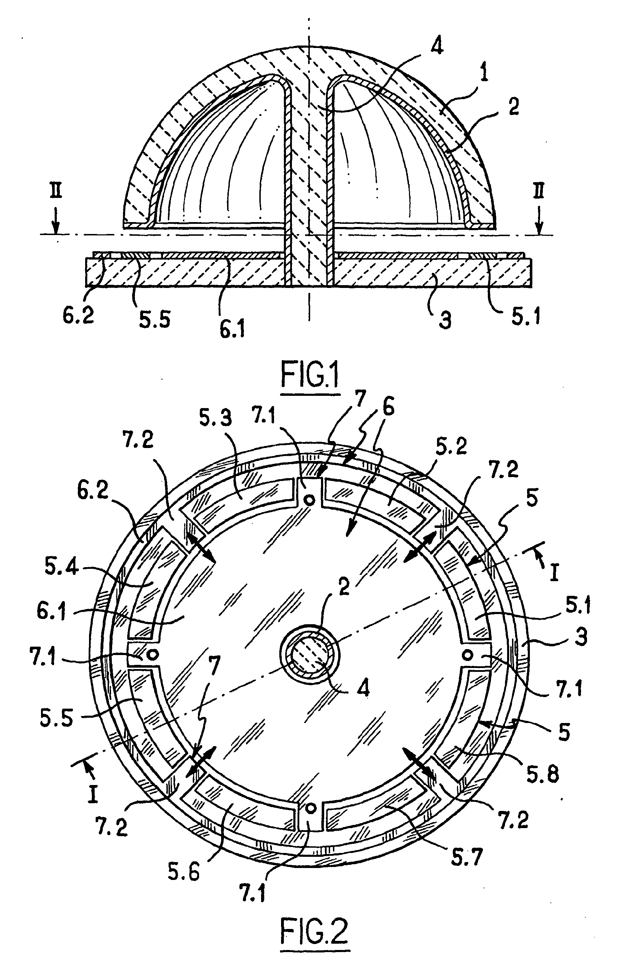

Pour une mise en oeuvre en mode gyrométrique, et selon le mode de mise en oeuvre préféré, l'organe vibrant est tout d'abord mis en vibration par application d'un signal de commande d'amplitude CA. La mise en vibration ne peut être obtenue par un signal à une fréquence double de la fréquence de résonance de l'organe vibrant 1. Dans une phase de mise en vibration le signal de commande d'amplitude est donc appliqué à la fréquence de résonance. De préférence le signal de commande d'amplitude est appliqué de façon qu'une vibration de l'organe vibrant soit orientée pour qu'un nceud de vibration soit en regard d'un intervalle entre deux électrodes. A cet effet, le signal de commande d'amplitude CA est appliqué modalement en quadrature à au moins deux électrodes. Dans le mode de réalisation illustré qui fonctionne en mode 2, le signal de commande d'amplitude CA est appliqué en phase à au moins deux électrodes à 45° l'une de l'autre, par exemple aux électrodes 5.1 et 5.2. La vibration résultante présente alors un ventre en regard de l'intervalle entre les électrodes 5.1 et 5.2 comme illustré par une flèche double en trait épais sur la figure. Des ventres correspondants apparaissent dans les intervalles entre les électrodes 5.3 et 5.4, 5.5 et 5.6, 5.7 et 5.8. Simultanément des noeuds se forment dans les intervalles entre les électrodes 5.2 et 5.3, 5.4 et 5.5, 5.6 et 5.7, 5.8 et 5.1, comme illustré par des petits ronds en trait épais sur la figure 2. Pour augmenter la dynamique d'établissement de la vibration, les électrodes diamétralement opposées, c'est-à-dire les électrodes 5.5 et 5.6 dans l'exemple décrit ci-dessus, sont également alimentées avec le même signal de commande d'amplitude. La vibration ainsi orientée a donc une amplitude non nulle en regard de chaque électrode principale 5.

La même position de la vibration peut également être obtenue en alimentant l'électrode 5.2 ou les électrodes 5.2 et 5.6 avec un signal CA, et l'électrode 5.3 ou les électrodes 5.3 et 5.7 avec un signal -CA (c'est-à-dire en opposition de phase).

Dans les applications où la commande est effectuée de façon alternée avec la détection par un multiplexage dans le temps de la commande et de la détection, la dynamique peut encore être augmentée en alimentant simultanément les huit électrodes principales 5. Pour une position de la vibration telle qu'illustrée sur la figure 2, on alimente dans ce cas les électrodes 5.1, 5.2, 5.5 et 5.6 avec un signal CA, et les électrodes 5.3, 5.4 5.7 et 5.8 avec un signal -CA.

Dans le mode de mise en oeuvre préféré, après la phase de mise en vibration, la commande d'amplitude est basculée sur une phase d'entretien dans laquelle le signal de commande d'amplitude CA est appliqué à une fréquence double de la fréquence de résonance. Le signal de commande peut alors être appliqué soit aux électrodes 5 soit à la couche métallisée 2 de la cloche 1. En effet à cette fréquence, la variation d'entrefer en regard des électrodes suffit à générer des forces électrostatiques qui entretiennent la vibration, même dans le cas où un même signal de commande est appliqué à toutes les électrodes 5 ou dans le cas où un signal de commande d'amplitude unique est appliqué à la cloche.

Après la phase de mise en vibration du résonateur, une commande de précession est appliquée pour maintenir l'orientation de la vibration en dépit des mouvements de l'équipement sur lequel est monté le résonateur. Selon l'invention cette commande de précession CP, dont l'amplitude est par ailleurs calculée de façon connue en soi, est appliquée à une fréquence double de la fréquence de résonance, sur les électrodes de commande avec le signe approprié pour maintenir la vibration selon une orientation stable.

Parallèlement, la commande de quadrature CQ est de préférence appliquée selon l'invention selon un signal continu dont l'amplitude est calculée de façon connue en soi pour annuler la dérive du résonateur. Comme la commande de précession, la commande de quadrature est appliquée de façon appropriée en fonction des électrodes utilisées pour l'application de cette commande.

A titre d'exemple, dans le cas où le signal de commande d'amplitude d'entretien est appliqué à la fréquence double de la fréquence de résonance, un signal CA - CP - CQ est appliqué à l'électrode 5.1 tandis qu'un signal CA + CP + CQ est appliqué à l'électrode 5.2. Comme précédemment, la dynamique peut être augmentée en appliquant respectivement les mêmes signaux aux électrodes 5.5 et 5.6. Dans le cas d'une utilisation des huit électrodes, le signal CA - CP - CQ est appliqué aux électrodes 5.1, 5.3, 5.5 et 5.7 et le signal CA + CP + CQ est simultanément appliqué aux électrodes 5.2, 5.4, 5.6, et 5.8. Dans le cas où le signal de commande d'amplitude CA est appliqué à la cloche, cette composante est supprimée du signal appliqué aux électrodes de commande.

Dans une mise en oeuvre en mode gyrométrique, les deux parties 6.1 et 6.2 de l'électrode de garde sont reliées à la masse afin d'exercer les fonctions habituelles de réduction de la diaphonie entre les électrodes.

Dans le cas d'une utilisation de quatre électrodes seulement pour l'application des signaux de commande, les autres électrodes sont disponibles pour effectuer la détection de la vibration modifiée afin de calculer la commande de précession et la vitesse de rotation du résonateur . Une seule électrode peut être utilisée pour cette réception. Toutefois, pour une meilleure dynamique au moins deux électrodes, et de préférence quatre électrodes, sont utilisées pour la réception.

Dans l'exemple décrit ci-dessus où les signaux de commande sont appliqués aux électrodes 5.1, 5.2, 5.5, 5.6, et en désignant par D5.3 le signal détecté sur l'électrode 5.3, D5.4 le signal détecté sur l'électrode 5.4..., la mesure de l'amplitude de la vibration peut être réalisée par l'une des combinaisons D5.3 + D5.4, D5.3 + D5.7, D5.4 + D5.8, D5.3 + D5.8, D5.4 + D5.7 ou encore D5.3 + D5.4 + D5.7 + D5.8. Dans le cas d'un multiplexage permettant une alternance de la commande et de la détection, la mesure de l'amplitude peut être réalisée sur les huit électrodes 5 par la combinaison D5.1 + D5.2 + D5.5 + D5.6 - D5.3 - D5.4 - D5.7 - D5.8. La mesure de l'erreur d'asservissement peut être réalisée par une des combinaisons D5.3 - D5.4, D5.3 - D5.8, D5.7 - D5.4 ou D5.3-D5.4 + D5.7 - D5.8.

Dans une mise en oeuvre en mode gyroscopique, la commande de précession est supprimée mais le résonateur peut par ailleurs être mis en oeuvre de la même façon que dans le mode gyrométrique. Toutefois, dans une mise en mode gyroscopique, l'orientation de la vibration n'est plus fixe et est fonction des mouvements auxquels le résonateur est soumis. En particulier, la position des noeuds évolue en fonction du mouvement du résonateur , de sorte qu'à certains instants, la position d'un noeud coïncide avec le centre d'une électrode et dans le cas d'un signal de commande de quadrature continu, celui-ci n'est plus soumis à une intermodulation en raison d'une absence de variation d'entrefer. Selon un autre aspect de l'invention, l'électrode de garde est utilisée pour appliquer la commande de quadrature à des électrodes qui ne sont pas en regard d'un noeud de vibration.

Pour la description de cette mise en oeuvre, on partira de la situation où les électrodes principales utilisées sont les électrodes 5.1, 5.2, 5.5 et 5.6. Dans la phase d'entretien et en l'absence de tout mouvement du résonateur , le signal CA - CQ est appliqué aux électrodes 5.1 et 5.5 tandis que le signal CA + CQ est appliqué aux électrodes 5.2 et 5.6. En supposant que le résonateur soit soumis à un mouvement faisant tourner la vibration dans le sens des aiguilles d'une montre, le noeud qui était initialement entre les électrodes 5.2 et 5.3 se déplace jusqu'au moment où ce noeud est voisin du milieu de l'électrode 5.2. Dans cette situation la commande de quadrature appliquée à l'électrode 5.2 perd sont efficacité. Pour éviter cette perte d'efficacité, on bascule le signal CA - CQ sur la partie 6.1 de l'électrode de garde et le signal CA + CQ sur la partie 6.2 de l'électrode de garde. Le noeud qui est en regard de l'électrode 5.2 se trouve alors à mi-chemin entre les électrodes 7.1 et 7.2 respectivement soumises aux signaux CA - CQ et CA + CQ. L'entrefer en regard des électrodes 7.1 et 7.2 est donc variable de sorte que la commande de quadrature est soumise à une intermodulation. La commande de quadrature retrouve donc sa pleine efficacité. Les signaux de commande sont ainsi alternativement appliqués aux électrodes principales 5 et aux électrodes secondaires 7 au fur et à mesure de la rotation de la vibration afin de maintenir les noeuds de vibration entre les électrodes auxquelles le signal de commande de quadrature est appliqué. On notera à ce propos que pour basculer les signaux de commande d'un groupe d'électrodes à l'autre, il suffit de ramener à zéro l'amplitude du signal de commande sur les électrodes inactives sans qu'il soit nécessaire d'effectuer une commutation du signal de commande d'un groupe d'électrodes à l'autre. Le procédé peut donc être utilisé dans le domaine spatial dans lequel il n'est pas possible d'utiliser des commutateurs électroniques.

Ainsi qu'il a été indiqué ci-dessus l'augmentation du nombre d'électrodes auxquelles les signaux de commande sont appliqués permet d'augmenter la dynamique et donc la précision du fonctionnement. En outre dans les résonateurs utilisés dans le domaine spatial il n'est pas possible d'effectuer une commutation des électrodes entre une fonction de commande et une fonction de détection. Pour une mise en oeuvre dans ce domaine il est donc habituellement nécessaire d'affecter la moitié des électrodes principales à la commande et l'autre moitié à la détection.

Selon un mode de mise en oeuvre préféré de l'invention en mode gyroscopique il est néanmoins possible d'affecter les mêmes électrodes à la commande et à la détection.

Selon ce mode de mise en oeuvre, dans la phase d'entretien de la vibration, la commande d'amplitude est appliquée à la cloche à une fréquence double de la fréquence de résonance. Le signal de commande de quadrature continu -CQ est appliqué aux électrodes principales 5.1, 5.3, 5.5 et 5.7 tandis que le signal de commande de quadrature continu CQ est appliqué aux électrodes principales 5.2, 5.4, 5.6 et 5.8.

Simultanément chacune des électrodes principales et auxiliaires est reliée à un organe de détection qui de façon connue en soi est un amplificateur de charge, c'est-à-dire un amplificateur opérationnel comportant un condensateur disposé entre l'entrée inverseuse reliée à une électrode du résonateur et la sortie de l'amplificateur. Par ailleurs, le signal de commande de quadrature est appliqué sur l'entrée non inverseuse et s'ajoute au signal de détection. Le signal de commande de quadrature étant une tension connue et continue, il est facile de soustraire ce signal pour obtenir le signal de détection seul. On notera à ce propos que deux électrodes diamétralement opposées peuvent être reliées en parallèle à un même amplificateur de charge.

Lors de la rotation de la vibration, la commande de quadrature est appliquée alternativement sur les électrodes principales et sur les électrodes auxiliaires comme indiqué précédemment. En définitive, avec cette mise en oeuvre de l'invention, il suffit de onze connexions (la cloche, les huit électrodes principales et les deux parties de l'électrode de garde) pour pouvoir appliquer le signal de commande à huit électrodes et recueillir le signal de détection sur huit électrodes.

A ce propos selon encore un aspect de l'invention, il est possible de calibrer le gain des détecteurs pour que celui-ci soit le même selon deux voies en quadrature. A cet effet une analyse de la vibration est effectuée à une fréquence double de la fréquence de résonance pour des électrodes modalement en quadrature lorsqu'un noeud de vibration est en regard de celles-ci. Ce calibrage peut être effectué soit dans une phase d'initialisation en appliquant une commande de précession pour placer un noeud de vibration successivement en regard de chacune des électrodes, soit en effectuant une mesure de calibrage chaque fois que la vibration est détectée dans une position pour laquelle un noeud de vibration est en regard d'une électrode. A titre d'exemple dans une phase d'initialisation, la vibration est tout d'abord orientée pour qu'un noeud de vibration soit en regard des électrodes 5.2, 5.6, 5.4 et 5.8, les électrodes 5.2 et 5.6 étant reliées en parallèle à un premier amplificateur de charge ayant un gain G1 tandis que les électrodes 5.4 et 5.8 sont reliées à un second amplificateur de charge ayant un gain G2. Une démodulation de la vibration à une fréquence double de la fréquence de résonance permet de déterminer les gains G1 et G2. La vibration est ensuite orientée pour qu'un noeud de vibration soit en regard des électrodes 5.1, 5.3, 5.5 et 5.7. De la même façon que précédemment on détermine les gains G3 et G4 des amplificateurs de charge associés à chaque paire d'électrode. On compare ensuite G1 + G2 à G3 + G4 et on en déduit un coefficient k pour que G1 + G2 = k (G3 + G4). Le coefficient k est ensuite appliqué lors de la détection démodulée à la fréquence de résonance. On notera que l'équilibrage de gain a été décrit en relation avec deux groupes d'électrodes en quadrature comprenant chacun quatre électrodes. L'équilibrage du gain peut également être effectué sur deux électrodes seulement, par exemple en mesurant G1 sur l'électrode 5.2 seulement et G3 sur l'électrode 5.1 seulement puis en déterminant le coefficient k pour que G1 = k G3.

Bien entendu, l'invention n'est pas limitée aux modes de mise en oeuvre décrits et est susceptible de variantes qui apparaîtront à l'homme de métier sans sortir du cadre de l'invention tel que défini par les revendications.

En particulier, bien que la mise en oeuvre du procédé selon l'invention ait été décrite en relation avec un signal de commande d'amplitude à une fréquence double de la fréquence de résonance dans la phase d'entretien, ce qui simplifie les équations en mode gyrométrique puisque le signal de précession est lui-même à une fréquence double de la fréquence de résonance, on peut appliquer le signal de commande d'amplitude à la fréquence de résonance.

De même, dans le mode gyrométrique, si l'on souhaite simplifier les calculs en acceptant une légère dérive, on peut appliquer la commande de quadrature à la fréquence de résonance ou au double de la fréquence de résonance.

Par ailleurs, l'application d'un signal de quadrature continu en relation avec une commande d'amplitude à une fréquence double de la fréquence de résonance tend à faire perdre de la dynamique. Si on souhaite récupérer une dynamique importante tout en acceptant une dégradation partielle de la stabilité, on peut appliquer une commande de quadrature selon un signal continu tout en appliquant une commande d'amplitude à la fréquence de résonance.

Dans le mode de réalisation préféré la commande d'amplitude est appliquée pour que la vibration obtenue présente des noeuds entre les électrodes, ce qui permet d'obtenir de fortes variations d'entrefer en regard des électrodes et donc une intermodulation maximale entre les variations d'entrefer et les signaux de commande continus ou les signaux de commande à une fréquence double de la fréquence de résonance. Le procédé selon l'invention peut également être mis en oeuvre avec une dynamique moins importante en générant la vibration de façon classique de façon que la vibration présente des noeuds et des ventres en regard des électrodes. Cette perte de dynamique devra alors être compensée par une électronique de commande et une électronique de détection plus puissantes.

Bien que l'invention ait été décrite en relation avec un résonateur hémisphérique, l'invention s'applique à tout résonateur à commande électrostatique.

## Revendications

1. Procédé de mise en oeuvre en mode gyrométrique d'un résonateur comportant un organe vibrant (1) adapté à être mis en vibration à une fréquence de résonance sous l'effet de forces électrostatiques générées par des électrodes disposées en regard d'une partie de l'organe vibrant, le procédé comportant les étapes d'exciter l'organe vibrant au moyen d'une combinaison de signaux de commande comprenant un signal de commande d'amplitude (CA) , un signal de commande de précession (CP) et un signal de commande de quadrature (CQ) modulés en amplitude, de mesurer une vibration de l'organe vibrant et de démoduler la vibration à la fréquence de résonance de l'organe vibrant, **caractérisé en ce que** le signal de commande de précession (CP) est appliqué à une fréquence double de la fréquence de résonance.

2. Procédé selon la revendication 1, **caractérisé en ce que** dans une phase de mise en vibration, le signal de commande d'amplitude (CA) est appliqué à la fréquence de résonance de l'organe vibrant et dans une phase d'entretien le signal de commande d'amplitude (CA) est appliqué à une fréquence double de la fréquence de résonance.

3. Procédé selon la revendication 2, **caractérisé en ce que** dans la phase d'entretien, le signal de commande d'amplitude (CA) est appliqué sur au moins une moitié des électrodes réparties de façon symétrique par rapport à l'organe vibrant, ou à l'organe vibrant lui-même.

4. Procédé selon la revendication 1, **caractérisé en ce que** le signal de commande l'amplitude (CA) est appliqué de façon que la vibration de l'organe vibrant soit orientée pour qu'un noeud de vibration soit en regard de chaque intervalle entre deux électrodes.

5. Procédé selon la revendication 3 et la revendication 4 prises en combinaison, **caractérisé en ce qu'**au moins pendant la phase de mise en vibration, le signal de commande d'amplitude (CA) est appliqué à au moins deux électrodes modalement en quadrature l'une par rapport à l'autre.

6. Procédé selon la revendication 1, **caractérisé en ce que** le signal de commande de quadrature (CQ) est un signal continu appliqué sur des électrodes communes au signal de commande d'amplitude (CA) et au signal de commande de précession (CP).

7. Procédé de mise en oeuvre en mode gyroscopique d'un résonateur comportant un organe vibrant (1) adapté à être mis en vibration à une fréquence de résonance sous l'effet de forces électrostatiques générées par des électrodes disposées en regard d'une partie de l'organe vibrant, le procédé comportant les étapes d'exciter l'organe vibrant au moyen d'une combinaison de signaux de commande comprenant dans une phase d'entretien un signal de commande d'amplitude (CA) à une fréquence double de la fréquence de résonance de l'organe vibrant, et un signal de commande de quadrature (CQ) continu, tous les deux modulés en amplitude, de mesurer une vibration de l'organe vibrant et de démoduler la vibration à la fréquence de résonance de l'organe vibrant, **caractérisé en ce que** les signaux de commande d'amplitude et les signaux de commande de quadrature sont appliqués en quadrature à des électrodes communes.

8. Procédé selon la revendication 7, **caractérisé en ce que** le signal de commande d'amplitude (CA) est appliqué à au moins la moitié des électrodes réparties de façon symétrique.

9. Procédé selon la revendication 7, **caractérisé en ce que** le signal de commande de quadrature est appliqué à des électrodes encadrant un noeud de vibration.

10. Procédé de mise en oeuvre en mode gyroscopique d'un résonateur comportant un organe vibrant (1) adapté à être mis en vibration à une fréquence de résonance au moyen d'une combinaison de signaux de commande comprenant dans une phase d'entretien un signal de commande d'amplitude (CA) à une fréquence double de la fréquence de résonance de l'organe vibrant, et un signal de commande de quadrature (CQ) continu, tous les deux modulés en amplitude, **caractérisé en ce que** le procédé comporte les étapes d'appliquer le signal de commande d'amplitude sur l'organe vibrant lui-même, d'appliquer le signal de commande de quadrature sur les électrodes disposées en regard de l'organe vibrant, et de détecter simultanément sur ces mêmes électrodes une vibration de l'organe vibrant.

11. Procédé selon la revendication 10, **caractérisé en ce que** le signal de commande de quadrature est appliqué à des électrodes encadrant un noeud de la vibration de l'organe vibrant.

12. Procédé selon la revendication 11, **caractérisé en ce que** le signal de commande de quadrature est appliqué alternativement à deux groupes d'électrodes intercalées les unes avec les autres.

13. Procédé selon la revendication 10, **caractérisé en ce qu'**un équilibrage de gain de détection d'électrodes en quadrature est réalisé par une analyse de la vibration à une fréquence double de la fréquence de résonance pour déterminer les gains de détection réels, et calcul d'un coefficient d'équilibrage.

## Claims

1. A method of implementing a resonator in rate gyro mode, the resonator comprising a vibrating member (1) adapted to be set into vibration at a resonant frequency under the effect of electrostatic forces generated by electrodes placed facing a portion of the vibrating member, the method comprising the steps of exciting the vibrating member by means of a combination of control signals comprising an amplitude control signal (CA), a precession control signal (CP), and an amplitude-modulated quadrature control signal (CQ), of measuring vibration of the vibrating member, and of demodulating the vibration at the resonant frequency of the vibrating member, the method being **characterized in that** the precession control signal (CP) is applied at a frequency that is twice the resonant frequency.

2. A method according to claim 1, **characterized in that** during a stage of setting into vibration, the amplitude control signal (CA) is applied at the resonant frequency of the vibrating member, and during a stage of sustaining vibration, the amplitude control signal (CA) is applied at a frequency twice the resonant frequency.

3. A method according to claim 2, **characterized in that** during the sustaining stage, the amplitude control signal (CA) is applied to at least half of the electrodes distributed symmetrically about the vibrating member, or to the vibrating member itself.

4. A method according to claim 1, **characterized in that** the amplitude control signal (CA) is applied in such a manner that the vibration of the vibrating member is oriented so that a vibration node is in register with each gap between two electrodes.

5. A method according to claim 3 and claim 4 taken in combination, **characterized in that** at least during the stage of setting into vibration, the amplitude control signal (CA) is applied to at least two electrodes that are modally in quadrature relative to each other.

6. A method according to claim 1, **characterized in that** the quadrature control signal (CQ) is a DC signal applied to electrodes common to the amplitude control signal (CA) and to the precession control signal (CP).

7. A method of implementing a resonator in free gyro mode, the resonator comprising a vibrating member (1) adapted to be set into vibration at a resonant frequency under the effect of electrostatic forces generated by electrodes disposed facing a portion of the vibrating member, the method comprising the steps of exciting the vibrating member by means of a combination of control signals comprising, during a sustaining stage, an amplitude control signal (CA) at a frequency twice the resonant frequency of the vibrating member, and a DC quadrature control signal (CQ), both control signals being amplitude-modulated, of measuring vibration of the vibrating member, and of demodulating the vibration at the resonant frequency of the vibrating member, the method being **characterized in that** the amplitude control signals and the quadrature control signals are applied in quadrature to common electrodes.

8. A method according to claim 7, **characterized in that** the amplitude control signal (CA) is applied to at least half of the electrodes that are distributed in symmetrical manner.

9. A method according to claim 7, **characterized in that** the quadrature control signal is applied to electrodes on either side of a vibration node.

10. A method of implementing a resonator in free gyro mode, the resonator comprising a vibrating member (1) adapted to be set into vibration at a resonant frequency by means of a combination of control signals comprising, during a sustaining stage, an amplitude control signal (CA) at a frequency twice the resonant frequency of the vibrating member, and a DC quadrature control signal (CQ), both control signals being amplitude-modulated, the method being **characterized in that** it includes the steps of applying the amplitude control signal to the vibrating member itself, of applying the quadrature control signal to the electrodes disposed facing the vibrating member, and of simultaneously detecting vibration of the vibrating member using the same electrodes.

11. A method according to claim 10, **characterized in that** the quadrature control signal is applied to electrodes on either side of a vibration node of the vibrating member.

12. A method according to claim 11, **characterized in that** the quadrature control signal is applied in alternation to two groups of electrodes that are interleaved between each other.

13. A method according to claim 10, **characterized in that** detection gain of electrodes in quadrature is balanced by analyzing the vibration at a frequency twice the resonant frequency in order to determine the real detection gains, and by calculating a balancing coefficient.

## Patentansprüche

1. Verfahren zum Betrieb eines Resonators im gyrometrischen Modus, wobei der Resonator ein Schwingelement (1) umfasst, das dazu geeignet ist, unter der Wirkung von elektrostatischen Kräften, die von Elektroden erzeugt werden, die gegenüber einem Abschnitt des Schwingelements angeordnet sind, mit einer Resonanzfrequenz in Schwingung versetzt zu werden, wobei das Verfahren die Schritte umfasst: Erregen des Schwingelements mittels einer Kombination aus Steuersignalen, die ein Amplitudensteuersignal (CA), ein Präzessionssteuersignal (CP) und ein Quadratursteuersignal (CQ) umfasst, die amplitudenmoduliert sind, Messen einer Schwingung des Schwingelements und Demodulieren der Schwingung mit der Resonanzfrequenz des Schwingelements, **dadurch gekennzeichnet, dass** das Präzessionssteuersignal (CP) mit einer doppelten Frequenz der Resonanzfrequenz angelegt wird.

2. Verfahren nach Anspruch 1, **dadurch gekennzeichnet, dass** in einer Phase des In-Schwingung-Versetzens das Amplitudensteuersignal (CA) mit der Resonanzfrequenz des Schwingelements angelegt wird und in einer Beetriebsphase das Amplitudensteuersignal (CA) mit einer doppelten Frequenz der Resonanzfrequenz angelegt wird.

3. Verfahren nach Anspruch 2, **dadurch gekennzeichnet, dass** in der Betriebsphase das Amplitudensteuersignal (CA) an mindestens einer Hälfte der Elektroden angelegt wird, die auf symmetrische Weise relativ zum Schwingelement verteilt sind, oder am Schwingelement selbst.

4. Verfahren nach Anspruch 1, **dadurch gekennzeichnet, dass** das Amplitudensteuersignal (CA) derart angelegt wird, dass die Schwingung des Schwingelements derart ausgerichtet ist, dass sich ein Schwingungsknoten gegenüber jedem Intervall zwischen zwei Elektroden befindet.

5. Verfahren nach Anspruch 3 und Anspruch 4, in Kombination genommen, **dadurch gekennzeichnet, dass** mindestens während der Phase des In-Schwingung-Versetzens das Amplitudensteuersignal (CA) an mindestens zwei Elektroden angelegt wird, die zueinander modal um 90° phasenverschoben sind.

6. Verfahren nach Anspruch 1, **dadurch gekennzeichnet, dass** das Quadratursteuersignal (CQ) ein kontinuierliches Signal ist, das an Elektroden angelegt wird, die dem Amplitudensteuersignal (CA) und dem Präzessionssteuersignal (CP) gemeinsam sind.

7. Verfahren zum Betreiben eines Resonators im gyroskopischen Modus, wobei der Resonator ein Schwingelement (1) umfasst, das dazu geeignet ist, unter der Wirkung von elektrostatischen Kräften, die von Elektroden erzeugt werden, die gegenüber einem Abschnitt des Schwingelements angeordnet sind, mit einer Resonanzfrequenz in Schwingung versetzt zu werden, wobei das Verfahren die Schritte umfasst: Erregen des Schwingelements mittels einer Kombination von Steuersignalen, die in einer Betriebsphase ein Amplitudensteuersignal (CA) mit einer doppelten Frequenz der Resonanzfrequenz des Schwingelements und ein kontinuierliches Quadratursteuersignal (CQ) umfasst, die beide amplitudenmoduliert sind, Messen einer Schwingung des Schwingelements und Demodulieren der Schwingung mit der Resonanzfrequenz des Schwingelements, **dadurch gekennzeichnet, dass** die Amplitudensteuersignale und die Quadratursteuersignale um 90° phasenverschoben an den gemeinsamen Elektroden angelegt werden.

8. Verfahren nach Anspruch 7, **dadurch gekennzeichnet, dass** das Amplitudensteuersignal (CA) an mindestens der Hälfte der auf symmetrische Weise verteilten Elektroden angelegt wird.

9. Verfahren nach Anspruch 7, **dadurch gekennzeichnet, dass** das Quadratursteuersignal an Elektroden angelegt wird, die einen Schwingungsknoten einrahmen.

10. Verfahren zum Betreiben eines Resonators im gyroskopischen Modus, wobei der Resonator ein Schwingelement (1) umfasst, das dazu geeignet ist, mit einer Resonanzfrequenz in Schwingung versetzt zu werden, mittels einer Kombination von Steuersignalen, die in einer Betriebsphase ein Amplitudensteuersignal (CA) mit einer doppelten Frequenz der Resonanzfrequenz des Schwingelements und ein kontinuierliches Quadratursteuersignal (CQ) umfassen, die beide amplitudenmoduliert sind, **dadurch gekennzeichnet, dass** das Verfahren die Schritte umfasst: Anlegen des Amplitudensteuersignals an dem Schwingungselement selbst, Anlegen des Quadratursteuersignals an den Elektroden, die gegenüber dem Schwingelement angeordnet sind, und gleichzeitiges Erfassen einer Schwingung des Schwingelements an genau diesen Elektroden.

11. Verfahren nach Anspruch 10, **dadurch gekennzeichnet, dass** das Quadratursteuersignal an Elektroden angelegt wird, die einen Schwingungsknoten des Schwingelements einrahmen.

12. Verfahren nach Anspruch 11, **dadurch gekennzeichnet, dass** das Quadratursteuersignal abwechselnd an zwei Elektrodengruppen angelegt wird, die ineinander verschachtelt sind.

13. Verfahren nach Anspruch 10, **dadurch gekennzeichnet, dass** ein Ausgleich der Detektionsverstärkung der um 90° phasenverschobenen Elektroden durch eine Analyse der Schwingung bei doppelter Frequenz der Resonanzfrequenz erfolgt, um die realen Detektionsverstärkungen zu bestimmen, und Berechnung eines Ausgleichskoeffizienten.
